(19) **Europäisches Patentamt**

**European Patent Office**

**Office européen des brevets**

(11) **EP 1 044 931 A1**

(12) **EUROPEAN PATENT APPLICATION**
published in accordance with Art. 158(3) EPC

(43) Date of publication:
18.10.2000 Bulletin 2000/42

(51) Int. Cl.⁷: **C03B 37/018**

(21) Application number: **98954721.1**

(86) International application number:
**PCT/JP98/05180**

(22) Date of filing: **18.11.1998**

(87) International publication number:
**WO 99/33755 (08.07.1999 Gazette 1999/27)**

(84) Designated Contracting States:
**DE GB**

(30) Priority: **26.12.1997 JP 35991097**
**26.12.1997 JP 35991197**

(71) Applicant:
**Sumitomo Electric Industries, Ltd.**
**Osaka-shi, Osaka 541-0041 (JP)**

(72) Inventors:
• **NAKAMURA, Motonori,**
**Yokohama Works**
**Yokohama-shi, Kanagawa 244-8588 (JP)**
• **OHGA, Yuichi;**
**Yokohama Works**
**Yokohama-shi, kanagawa 244-8588 (JP)**

(74) Representative: **HOFFMANN - EITLE**
**Patent- und Rechtsanwälte**
**Arabellastrasse 4**
**81925 München (DE)**

(54) **METHOD AND APPARATUS FOR MANUFACTURING OPTICAL FIBER BASE MATERIAL**

(57)    A method of making an optical fiber preform in which a starting member 3 prepared by fusing dummy rods to both end portions of a core preform is axially reciprocated relative to a glass synthesizing burner 2 while being rotated about its axis, so that fine particles of glass synthesized by the burner 2 are sprayed and deposited onto the outer periphery of the starting member, whereby a soot body is formed. At this time, marking points 11, 12 are set at positions separated from junctions between a core preform and the dummy rods toward the respective dummy rods by a predetermined distance, the relative reciprocating is effected by reversing the relative movement direction at the time when the burner 2 reaches turning points 15, 16 located closer to the respective end portions than are the marking points 11, 12, and a glass material is supplied to the burner 2 from a material supply device 5 only when the burner 2 is located between the marking points 11, 12.

**Fig.1**

**EP 1 044 931 A1**

## Description

## Technical Field

The present invention relates to a method and apparatus for making an optical fiber preform, which can precisely make a homogenous optical fiber preform.

## Background Art

Performed as a method of making an optical fiber preform is one in which a starting member prepared by fusing a dummy rod to each of both end portions of a core preform comprising a core and a cladding is axially reciprocated relative to a burner for synthesizing fine particles of glass while being rotated about its axis, whereby the fine particles of glass synthesized by the burner for synthesizing fine particles of glass are sprayed and deposited onto the outer periphery of the starting member.

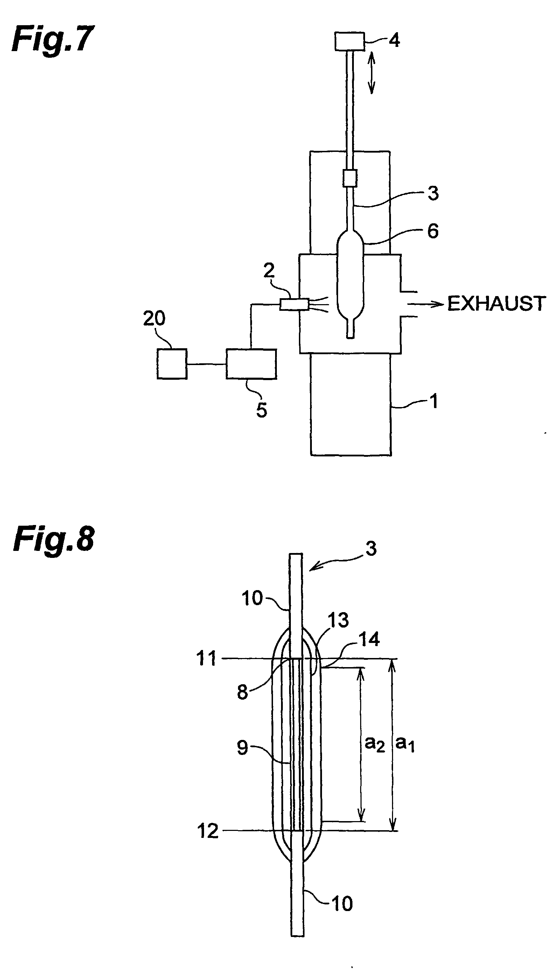

A configurational example of the apparatus for carrying out the above-mentioned method is schematically shown in Fig. 7. In this apparatus, a burner 2 is secured to a muffle 1, and a starting member 3 is reciprocated in the vertical direction, which is its axial direction, while being rotated, by an elevator device 4. A glass material such as $SiCl_4$ or the like and a burning gas are supplied to the burner 2 from a material supply device 5, and fine particles of glass (soot particles) synthesized by the burner 2 are deposited onto the outer periphery of the starting member 3, whereby a deposited body of fine particles of glass (soot body) 6 is formed.

In this method, the supply of glass material to the burner 2 is stopped at each time when the position of the burner 2 moving relative to the starting member 3 reaches the position of junction between the core preform and each dummy rod from the core preform position. Then, the burner 2 is further relatively moved toward the dummy rod, so as to heat an end portion of the soot body, which is formed on the outer side of the junction and whose outside diameter is tapered down toward the outer side. Alternatively, auxiliary burners dedicated to heating the glass preform may be disposed on the upper and lower sides (in the axial direction of the glass preform) of the glass synthesizing burner to which the glass material is supplied, so that the relative moving directions of the burners to the starting member are reversed at the time when the glass synthesizing burner reaches the position of junction between the core preform and each dummy rod, thus allowing the auxiliary burners to heat the end portions of the soot body.

Though the foregoing explanations relate to the case where a single burner is used as the glass synthesizing burner, Japanese Patent Application Laid-Open No. Sho 63-310745 discloses a technique using a plurality of glass synthesizing burners. This technique aims at eliminating the unevenness in soot body density at the soot body end portions caused by the interference of a plurality of burners when the relative moving directions of the soot body to the burners are reversed, so as to mass-produce a high-quality fiber preform without glass fractures by using the plurality of burners, without stopping the supply of glass materials even at the end portions of the soot body. In this technique, two marking points are set on the starting member beforehand, and the glass material supply to burners positioned outside both of the marking points is stopped, so as to yield effects similar to the above-mentioned case with a single burner.

## Disclosure of the Invention

Fig. 8 shows the form of thus formed soot body, i.e., optical fiber preform. Marking points (material supply stop points in the case of stopping the glass material supply to glass synthesizing burners, or relative movement direction reversing positions for glass synthesizing burners in the case using auxiliary burners) 11 and 12 coincide with respective junctions 8 between the core preform 9 and dummy rods 10 of a starting member 3. In the case where the outside diameter of the soot body is small, its outer periphery is formed as indicated by reference numeral 13, whereas the length of the constant outside diameter portion, which is the length of the effective portion of the soot body from which a consolidated body having a predetermined outside diameter is obtained when the soot body is made transparent, substantially approximates the whole length of the core preform 9 as indicated by $a_1$ in the drawing. As the outside diameter of the soot body increases, however, its outer periphery is formed as indicated by reference numeral 14, whereby the length of its constant outside diameter portion is shortened as indicated by $a_2$ in the drawing.

It is due to the fact that, soot particles are not uniformly deposited in the axial direction near the material supply stop points, whereby inconstant portions in which the outside diameter of the formed soot body tapers down toward the end portions are formed. In these inconstant portions, unlike the constant portion, since the outer peripheral surface of the formed soot body is inclined with respect to burners, the amount of deposition of soot particles is smaller in the part having a smaller outside diameter than in the part having a larger outside diameter, and these inconstant portions expand as the soot particles are deposited. As a result, the end portions of the core preform would not be utilized effectively, which causes its cost to rise.

For preventing the core preform from being wasted due to shortening of the length of the constant outside diameter portion as the outside diameter of the soot body increases, it will be enough if the above-mentioned marking points are set to positions sufficiently separated toward the dummy rods from the junctions between the core preform and the respective dummy rods. This case, however, is not economical since the time for forming the soot body becomes longer, thus increasing the loss in glass material.

If the target outside diameter of the soot body is always the same, it will be only necessary to determine each marking point once empirically and use thus determined marking point thereafter. However, there are fluctuations in the ratio between the outside diameter of the core preform and the core diameter and in the diameter of the elongated core preform, so that the target outside diameter of the soot body would differ among core preforms. Therefore, it has not been possible to use empirical material supply stop positions.

In view of such circumstances of the prior art, it is an object of the present invention to provide a method and apparatus for making an optical fiber preform which can yield a soot body formed with a constant outside diameter portion having a uniform quality over the whole length of the core preform with a minimized loss in glass material.

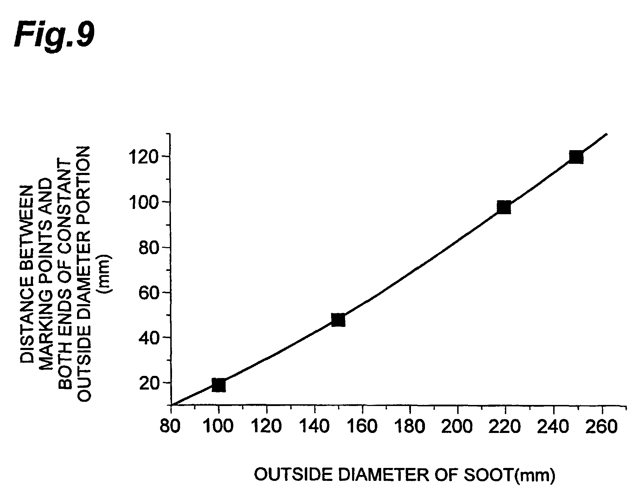

The inventors have diligently studied the relationship between the outside diameter of the soot body and the whole length of the constant outside diameter portion. Namely, with the marking points 11, 12 being made to coincide with the respective junctions 8 as shown in Fig. 8, soot bodies with various soot outside diameters were prepared, thus obtained soot bodies were heated in a high-temperature furnace so as to be made transparent, then characteristics of the fiber obtained as a result of fiber-forming in a drawing furnace were studied, and the boundary points between a part in the center portion where the characteristics were stable (the part corresponding to the constant outside diameter portion in the soot body) and portions at both ends where characteristics were unstable (the portions corresponding to the inconstant outside diameter portions of the soot body) were investigated, so as to determine the distance between each end of the constant outside diameter portion and the respective marking points. Thus obtained results are summarized in Fig. 9 as a correlation diagram.

As shown in Fig. 9, the distance increases as the outside diameter of the soot body is greater, and is substantially proportional to the square of outside diameter. Consequently, if each marking point is shifted beforehand toward the dummy rod from the junction by this distance, then the constant outside diameter portion and the core preform will completely coincide with each other. The inventors have found from Fig. 9 that, letting the outside diameter of the soot body be d [mm], the amount of shift is $0.0023 \times d^2$ [mm]. Also, the inventors have found that it is not always necessary for the boundaries between the constant outside diameter portion and the inconstant portions to coincide with both ends of the core preform, and that it is practically sufficient even if the amount of shift deviates by about ±35% from that in the case where they coincide with each other. Namely, the inventors have found that the length of the constant outside diameter portion becomes a necessary and sufficient length when a glass material is supplied to a glass synthesizing burner so as to deposit soot particles while the glass synthesizing burner is located between the marking positions which as shifted by the amount of $A \times d^2$ [mm] (where $0.0015 < A < 0.0030$). That is, the material supply stop points can immediately be obtained if the target outside diameter of the soot body is determined according to a core preform, whereby the constant outside diameter portion can stably be formed over substantially the whole length of the core preform regardless of fluctuations in core preforms.

The present invention is based on this finding, and provides a method of making an optical fiber preform comprising the steps of preparing a starting member by fusing a dummy rod to each of both end portions of a core preform comprising a core and a cladding; and spraying and depositing fine particles of glass synthesized by glass synthesizing burner(s) onto the outer periphery of the starting member so as to form a soot body while axially reciprocating the starting member relative to one or a plurality of glass synthesizing burners while rotating the starting member about its axis; wherein a marking point is set at a position separated from a junction between the core preform and each dummy rod by $A \times d^2$ [mm] (where $0.0015 < A < 0.0030$) toward the dummy rod, such that the reciprocating is effected by reversing the direction of a relative movement of the starting member and the one or a plurality of glass synthesizing burners at each time when all of the glass synthesizing burners reach the marking point or beyond toward an end of the starting member, each of the glass synthesizing burners being supplied with a glass material only when located between the marking points.

If a marking point is set at a position separated from the junction between the core preform and a dummy rod by $0.0015 \times d^2$ [mm] or less, then the constant outside diameter portion will become shorter than the whole length of the core preform, whereby an end portion of the core preform cannot be used effectively as an optical fiber preform.

If a marking point is set at a position separated from the junction between the core preform and a dummy rod by $0.0030 \times d^2$ [mm] or more, on the other hand, then the constant outside diameter portion will become longer than the whole length of the core preform, whereby the core preform as a whole can be used effectively as the optical fiber preform. Nevertheless, it is not preferable in that the constant outside diameter portion extends to a dummy rod portion, thereby wasting the glass material.

When a soot body is formed with marking points being restricted to the above-mentioned range, substantially the whole core preform can effectively be utilized as the optical fiber preform without wasting the glass material. Similar effects can also be obtained when the reciprocating directions are reversed at the marking point portions while the glass material is kept being supplied to the glass synthesizing burners without being stopped at the marking point portions.

On the other hand, the apparatus for making an optical fiber preform in accordance with the present invention comprises: (1) a holder member for holding at least one end of a starting member; (2) one or a plurality of glass synthesizing burners for spraying soot particles toward the starting member; (3) a material supply device for supplying a glass material to each of the glass synthesizing burners; (4) a moving device for axially reciprocating the starting member relative to the glass synthesizing burner while axially rotating the starting member; (5) an input device for inputting a target outside diameter value d of a soot body to be formed or a characteristic value necessary for a calculation thereof; and (6) a control device for setting the above-mentioned marking point from the inputted target outside diameter value of the soot body or from the target outside diameter value of the soot body determined from the inputted characteristic value, controlling the moving device so as to reverse the relative movement direction of the moving device and effect axial reciprocating when all the glass synthesizing burners reach the marking points or the starting member end portion side thereof, and controlling the material supply device so as to supply the glass material to each glass synthesizing burner only when the latter is located between the marking points.

Though the number of glass synthesizing burners employed can appropriately be determined depending on the dimensions of the aimed product and the like; when a plurality of such burners are used, the number thereof is preferably 3 or 4 in view of the form of the apparatus, efficiency thereof, and the like. Also, for maintaining a stable flame state, it is preferred that the supply of glass material to the glass synthesizing burner be gradually increased and gradually decreased over a time of about several to 10 seconds without being stopped and resumed instantaneously.

The present invention will be more fully understood from the detailed description given hereinbelow and the accompanying drawings, which are given by way of illustration only and are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will be apparent to those skilled in the art from this detailed description.

**Brief Description of the Drawings**

Fig. 1 is a schematic view showing the basic configuration of an apparatus for making an optical fiber preform in accordance with the present invention;
Fig. 2 is a schematic vertical sectional view of a starting member used for preparing an optical fiber preform in the apparatus of Fig. 1;
Fig. 3 is a view schematically showing the state of a soot body being formed and the burner in the apparatus of Fig. 1;
Fig. 4 is a graph showing the supply flow rate of glass material to a burner with respect to the relative position of the burner to the starting member;
Figs. 5 and 6 are views showing other burner configurations of the apparatus for making an optical fiber preform in accordance with the present invention, respectively;
Fig. 7 is a view schematically showing the configuration of a conventional apparatus for making an optical fiber preform;
Fig. 8 is a schematic view showing the structure of a soot body made of a conventional optical fiber preform; and
Fig. 9 is a correlation diagram between the outside diameter of the soot body and the amount of deviation from both ends of the constant outside diameter portion to marking points in the case where marking point positions and junctions are made to coincide with each other.

**Best Mode for Carrying Out the Invention**

In the following, preferred embodiments of the present invention will be explained in detail with reference to the accompanying drawings. To facilitate the comprehension of the explanation, the same reference numerals denote the same parts, where possible, throughout the drawings, and a repeated explanation will be omitted.

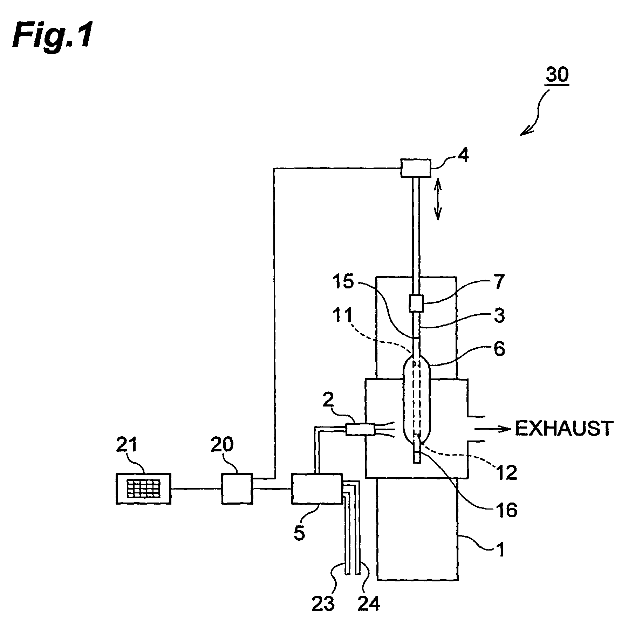

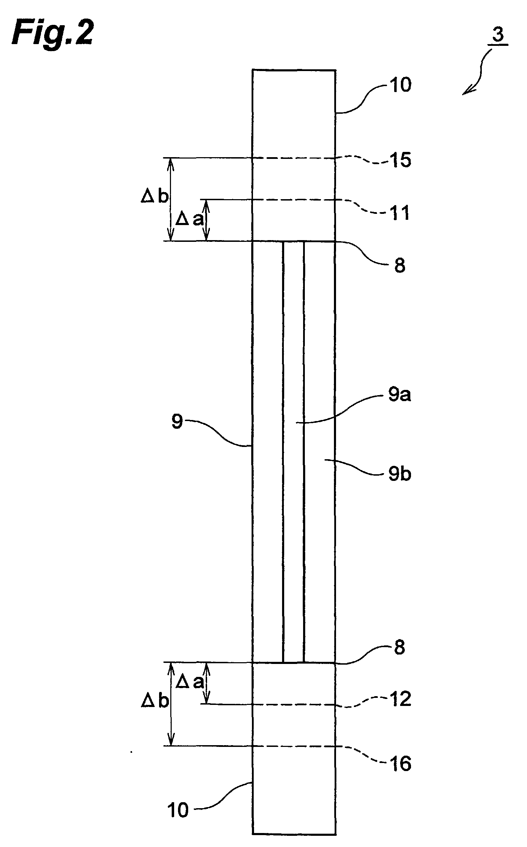

Fig. 1 is a schematic view showing the basic configuration of an apparatus for making an optical fiber preform in accordance with the present invention. Fig. 2 is a schematic vertical sectional view of a starting member 3 used for preparing an optical fiber preform in the apparatus of Fig. 1.

The starting member 3 used for preparing the optical fiber preform is fabricated, as shown in Fig. 2, by fusing a dummy rod 10 to each of both ends of a core preform 9 constituted by a core 9a and a cladding 9b.

In the manufacturing apparatus 30, as shown in Fig. 1, a holder member 7 for holding the starting member 3 at a dummy rod portion 10 and a glass synthesizing burner 2 for spraying soot particles onto the starting member 3 are disposed within a muffle 1, whereas the starting member 3 is rotated about its center axis at the same time when the holder member 7, while holding the starting member 3, is reciprocated by an elevator device 4, which is a moving device, in the vertical direction of the drawing, i.e., in the axial direction of the starting member 3. A material supply device 5 is connected to the burner 2, whereas a pipe 23 for supplying a glass material such as $SiCl_4$ or the like and a pipe 24 for supplying a fuel gas for combustion are connected to the material supply device 5. The reciprocation of the elevator device 4 and the supply of glass material and fuel gas are controlled by a control device 20. Connected to the control device 20 is an input device 21 for inputting control parameters.

Next, the method of making an optical fiber preform in accordance with the present invention carried out by the apparatus 30 will be explained. After the starting member 3 is held within the muffle 1 by the holder member 7, parameters concerning the starting member 3 are inputted by the input device 21. As a matter of course, the parameter input and the fixation of the starting member 3 can be effected in the reverse order thereto. These parameters include the ratio between the outside diameter of the core preform 9 and the core diameter, the diameter of the elongated core preform, and the like. Based on these parameters, the control device 20 calculates a target outside diameter d [mm] of a soot body to be formed. According to thus calculated target outside diameter d, the positions of marking points 11, 12 which act as a reference for the spraying area of soot particles are determined. The distance $\Delta a$ from each junction 8 between the core preform 9 and the respective dummy rod 10 to the respective marking point 11, 12 is set to fall within the range of $0.0015d^2 < \Delta a < 0.0030d^2$. Separately therefrom, the control device 20 sets turning points 15, 16 which act as a reference for positions at which the moving direction of reciprocation of the elevator device 4 is reversed. The distance $\Delta b$ from each junction 8 between the core preform 9 and the respective dummy rod 10 to the respective turning point 15, 16 is $\Delta b \geqq \Delta a$, here. The case where $\Delta b$ is sufficiently greater than $\Delta a$ will be explained in the following.

The elevator device 4 is controlled such that the starting member 3 is reciprocated in the axial direction, i.e., in the vertical direction of the drawing, while being rotated about its axis. Here, in the case where the starting member 3 is moving downward, the moving direction of the elevator device 4 is reversed at the time when the turning point 15 located on the upper side in the drawing reaches the position of the burner 2, i.e., the same level as the burner 2, so as to be switched to the upward movement. Then, at the time when the turning point 16 located on the lower side in the drawing reaches the position of the burner 2, the moving direction of the elevator device 4 is reversed so as to be switched to the downward movement. As these operations are repeated, the starting member 3 can be reciprocated with respect to the burner 2 between the turning points 15, 16. In this state, a glass material gas and the burning gas are supplied to the burner 2, so as to synthesize soot particles, which are then sprayed and deposited onto the outer periphery of the starting member 3. At this time, the glass materials are supplied to the burner 2 only when the latter is located between the marking points 11 and 12, so as to restrict the spraying area of soot particles.

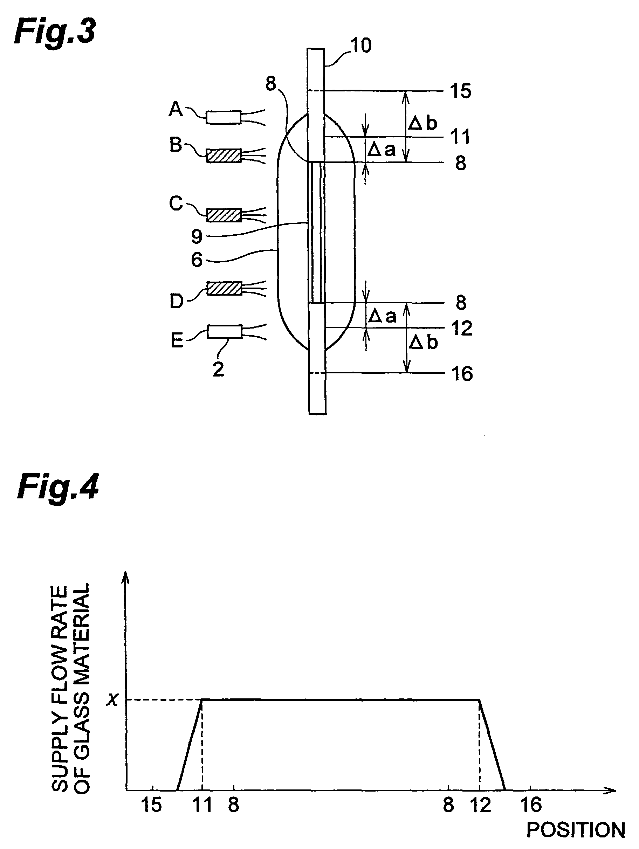

This material supply control will be explained with reference to Figs. 3 and 4. Fig. 3 is a view schematically showing the state of the soot body 9 being formed and the burner 2, whereas Fig. 4 is a graph showing the supply flow rate of glass material to the burner 2 with respect to the relative position of the burner 2 to the starting member 3. At the time when the burner 2 is located at the position indicated by A in Fig. 3, the glass material is not supplied thereto, and the burner 2 heats the soot body 9 formed on the starting member 3. For stabilizing the flame, as shown in Fig. 4, the supply flow rate of glass material is gradually increased from the time when the burner 2 approaches the marking point 11, so that it reaches a predetermined supply flow rate x at the position of the marking point 11, and the soot particles are sprayed onto the surface of the soot body 9. With the supply flow rate of glass material being kept constant as it is, the spraying of soot particles is continued (while corresponding to the positions indicated by B, C, and D in Fig. 3), and the supply flow rate of glass material is gradually decreased from the time when the burner 2 has reached the position of the marking point 12. The burner 2 keeps heating the soot body 9 alone until it reaches the turning point 16 (while corresponding to the position indicated by E in Fig. 3). As these operations are repeated, the soot body 9 is formed while being centered between the marking points 11 and 12 of the starting member.

When the outside diameter of the soot body 9 has reached the predetermined outside diameter d, the supply of the fuel gas and glass material to the burner 2 is stopped, the operation of the elevator device 4 is stopped at the same time, and the starting member 3 is taken out from the holding member 7. Thus, the starting member 3 formed with the soot body 9 becomes an optical fiber preform.

The constant outside diameter portion of thus formed soot body 9 substantially coincides with the whole length of the core preform 9. Since the inconstant outside diameter portions formed on both sides can be kept small, the whole core preform 9 can effectively be utilized, and the usage of glass material can be minimized.

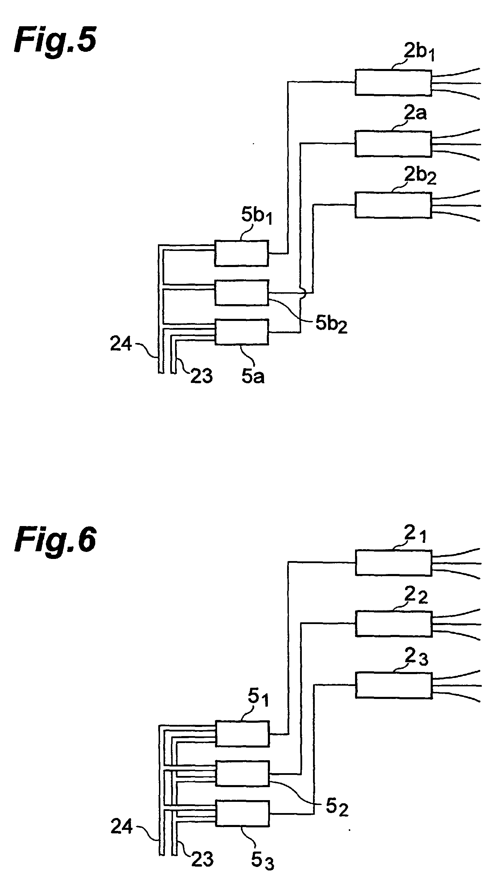

In the following, some of other embodiments of the apparatus for making an optical fiber preform in accordance with the present invention will be explained. Figs. 5 and 6 are configurational views showing burners in accordance with different embodiments, respectively. Configurations other than the burner 2 and material supply device 5 are omitted since they are identical to those in the embodiment of Fig. 1.

Though the embodiment shown in Fig. 1 has only one burner 2, auxiliary burners $2b_1$, $2b_2$ are provided on the upper and lower sides of a glass synthesizing burner 2a, i.e., on the respective end portion sides as viewed from the starting member 3 in the embodiment shown in Fig. 5. The glass material supply pipe 23 is not connected to respective fuel supply devices $5b_1$, $5b_2$ to the auxiliary burners $2b_1$, $2b_2$, whereby the auxiliary burners $2b_1$, $2b_2$ only heat the soot body without spraying soot particle. When making an optical fiber preform by this embodiment, with the turning points 15, 16 being made to coincide with the marking points 11, 12, respectively, the supply flow rate of glass material to the burner 2a may be kept constant.

The embodiment shown in Fig. 6 differs from that shown in Fig. 1 in that a plurality of glass synthesizing burners $2_1$ to $2_3$ (three in the drawing) are provided instead of one. In the case where an optical fiber preform is to be made by this embodiment, the moving direction of the starting member 3 is reversed at the time when the lower marking point 12 of the upwardly moving starting member 3 reaches the position of the burner $2_1$, so as to be switched to the downward movement; whereas, at the time when the upper marking point 11 reaches the position of the burner $2_3$, the moving direction of the starting member 3 is reversed so as to be switched to the upward movement. Repeating these operations yields effects similar to those of the embodiment of Fig. 1 with a single glass synthesizing burner.

Though the foregoing explanations relate to embodiments in which the starting member 3 is reciprocated up and down, the burner 2 may be reciprocated in the axial direction of the starting member 3 while the starting member 3 is kept stationary. Also, both of them may be moved. The embodiment shown in Fig. 5 may also be configured such that, with each of the starting member 3 and the auxiliary burners $2b_1$, $2b_2$ being fixed to the outside of the marking points, the glass synthesizing burner is moved alone.

The inventors carried out comparative tests for confirming effects that the whole length of a core preform can effectively be utilized as an optical fiber preform by the apparatus and method in accordance with the present invention, and their results will be explained in the following.

(Example 1)

Dummy rods made of silica glass were fused to both sides of a core preform having a diameter of 20 mm and a length of 500 mm, so as to prepare a starting member, which was then set to the apparatus of the embodiment shown in Fig. 1, whereby a soot body was prepared. The rotational frequency of the starting member was set to 40 rpm, and the moving speed of its upward and downward movements was set to 100 mm/s. The target outside diameter d of the soot body obtained from the ratio between the outside diameter of the core preform and the core diameter and from the diameter of the elongated core preform was 150 mm. As the burner 2, one with a concentric octuplex tube structure was used and was disposed perpendicular to the center axis of the starting member. As the glass material, $SiCl_4$ was used, and its supply flow rate was changed as shown in Fig. 4. The supply flow rate x within the spraying area was set to 3 slm (standard liters/min). On the other hand, 60 slm of hydrogen and 45 slm of oxygen for forming a flame and 4 slm of argon as a seal gas were constantly supplied.

The marking points 11, 12 were set at positions where $\Delta a = 52$ mm ($= 0.0023 \times d^2$). Also, the turning points 15, 16 were set at positions where ($\Delta b - \Delta a$) $= 200$ mm.

The forming of the soot body was terminated at the time when it reached the target outside diameter d ($= 150$ mm), and the soot body was taken out from the apparatus and then was heated in a high-temperature furnace so as to become transparent, thus yielding a consolidated body having an outside diameter of 82 mm. Cracks, protrusions, foreign matters, and the like were not seen on the surface and in the inside of thus obtained consolidated body, whereby its good quality was confirmed. Further, this consolidated body was formed into a fiber with an drawing furnace, and fiber characteristics of thus obtained fiber such as cutoff wavelength, MFD (mode-field diameter) and the like were investigated, whereby it was confirmed that the fiber had favorable characteristics over the whole length of the core preform.

(Example 2)

Using a starting member having conditions identical to those of Example 1, the apparatus of the embodiment with the burners shown in Fig. 5 was employed to form a soot body. The glass synthesizing burner 2a had the structure and gas supply conditions identical to those of the burner used in Example 1, and the distance from the glass synthesizing burner 2a to each of the auxiliary burners $2b_1$, $2b_2$ with a concentric duplex tube structure in the axial direction of the starting member 3 was set to 200 mm. For forming a flame, 10 slm of oxygen and 30 slm of hydrogen were constantly supplied to each of the auxiliary burners $2b_1$, $2b_2$. The marking points 11, 12 were set to positions where $\Delta a = 52$ mm ($= 0.0023 \times d^2$) as with Example 1, whereas the turning points 15, 16 were made to coincide with the marking points 11, 12. Namely, the glass material was continuously supplied to the glass synthesizing burner 2a. The other conditions were identical to those in Example 1.

The forming of the soot body was terminated at the time when it reached the target outside diameter d (= 150 mm), and the soot body was taken out from the apparatus and then was heated in a high-temperature furnace so as to become transparent, whereby a favorable consolidated body was obtained as in Example 1. Further, this consolidated body was formed into a fiber with a drawing furnace, and fiber characteristics of thus obtained fiber were investigated, whereby it was confirmed that the fiber had favorable characteristics over the whole length of the core preform.

(Example 3)

Dummy rods made of silica glass were fused to both sides of a core preform having a diameter of 30 mm and a length of 500 mm, so as to prepare a starting member, which was then set to the apparatus having the burner configuration shown in Fig. 6, whereby a soot body was prepared. The rotational frequency of the starting member and its upward and downward moving speed were identical to those in Example 1. The target outside diameter d of the soot body obtained from the ratio between the outside diameter of the core preform and the core diameter and from the diameter of the elongated core was 220 mm. As the burners $2_1$ to $2_3$, those of a concentric octuplex tube structure were used and disposed perpendicular to the center axis of the starting member at intervals of 200 mm. As the glass material, $SiCl_4$ was used, and its supply flow rate was changed as shown in Fig. 4. The supply flow rate x within the spraying area was set to 3 slm (standard liters/min). On the other hand, 100 slm of hydrogen and 60 slm of oxygen for forming a flame and 4 slm of argon as a seal gas were constantly supplied.

The marking points 11, 12 were set at positions where $\Delta a = 111$ mm (= $0.0023 \times d^2$). Also, the turning points 15, 16 were set at positions where $(\Delta b - \Delta a) = 511$ mm. Namely, at the time when the burner positioned closest to the center of the starting member among the three burners reached each marking point position, a reversal was effected.

The forming of the soot body was terminated at the time when it reached the target outside diameter d (= 220 mm), and the soot body was taken out from the apparatus and then was heated in a high-temperature furnace so as to become transparent, whereby a favorable consolidated body having an outside diameter of 115 mm was obtained. Further, this consolidated body was formed into a fiber with an drawing furnace, and fiber characteristics of thus obtained fiber were investigated, whereby it was confirmed that the fiber had favorable characteristics over the whole length of the core preform.

(Comparative Example 1)

A soot body having an outside diameter of 150 mm was prepared under the totally identical conditions with Example 1 except that the positions of marking points 11, 12 were set to their respective junctions 8 ($\Delta a = 0$ mm). Thus obtained soot body was heated in a high-temperature furnace so as to become transparent, whereby a favorable consolidated body having an outside diameter of 81 mm was obtained. This consolidated body was formed into a fiber with an drawing furnace, and fiber characteristics of thus obtained fiber were investigated, whereby it was found that fiber characteristics such as cutoff wavelength, MFD, and the like deviated from their target values within the areas extending 49 mm and 48 mm from the respective end sides of the core preform, with the characteristics deteriorating more toward both ends.

(Comparative Example 2)

A soot body having an outside diameter of 220 mm was prepared under the totally identical conditions with Example 3 except that the marking points 11, 12 were set to positions where $\Delta a = 50$mm (= $0.0010 \times d^2$). Identically, a reversal was effected at the time when the burner positioned closest to the center of the starting member among the three burners reached each marking point position. Thus obtained soot body was heated in a high-temperature furnace so as to become transparent, whereby a favorable consolidated body having an outside diameter of 116 mm was obtained. This consolidated body was formed into a fiber with an drawing furnace, and fiber characteristics of thus obtained fiber were investigated, whereby it was found that fiber characteristics such as cutoff wavelength, MFD, and the like deviated from their target values within the areas extending 48 mm each from both end sides of the core preform, with the characteristics deteriorating more toward both ends.

From these results, it has been confirmed that the method of making an optical fiber preform in accordance with the present invention has effects that an optical fiber preform for producing a fiber which yields favorable fiber characteristics substantially over the whole length of a core preform can be obtained.

From the invention thus described, it will be obvious that the invention may be varied in many ways. Such variations are not to be regarded as a departure from the spirit and scope of the invention, and all such modifications as would be obvious to one skilled in the art are intended for inclusion within the scope of the following claims.

**Industrial Applicability**

The present invention can be utilized for precisely making a homogenous optical fiber preform.

**Claims**

1. A method of making an optical fiber preform comprising the steps of:

preparing a starting member by fusing a dummy rod to each of both end portions of a core preform comprising a core and a cladding; and

spraying and depositing fine particles of glass synthesized by glass synthesizing burner(s) onto the outer periphery of said starting member so as to form a soot body while axially reciprocating said starting member relative to one or a plurality of glass synthesizing burners while rotating said starting member about its axis;

wherein a marking point is set at a position separated from a junction between said core preform and each dummy rod by A × (a target outside diameter of the soot body $[mm])^2$ [mm] (where 0.0015 < A < 0.0030) toward the dummy rod, such that said reciprocating is effected by reversing the direction of a relative movement of said starting member and said one or a plurality of glass synthesizing burners at each time when all of said glass synthesizing burners reach said marking point or beyond toward an end of said starting member, each of said glass synthesizing burners being supplied with a glass material only when located between the marking points.

2. A method of making an optical fiber preform according to claim 1, wherein said reciprocating is effected by reversing the direction of said relative movement at each time when the burner positioned closest to a center of said starting member among said glass synthesizing burners reaches said marking point position.

3. A method of making an optical fiber preform according to claim 1, wherein a fuel gas supply to said glass synthesizing burners positioned on said starting member end portion side of said marking point are continued so as to heat an end portion of the soot body formed.

4. A method of making an optical fiber preform according to claim 1, wherein an end portion of the formed soot body is heated by auxiliary burners disposed on said starting member end portion side of said marking point.

5. An apparatus for making an optical fiber preform, in which a starting member prepared by fusing a dummy rod to each of both end portions of a core preform comprising a core and a cladding is axially reciprocated relative to one or a plurality of disposed glass synthesizing burners while the starting member is being rotated about its axis; and fine particles of glass synthesized by the glass synthesizing burners are sprayed and deposited onto the outer periphery of the starting member so as to form a soot body;

said apparatus comprising:

a holder member for holding at least one end of said starting member;
one or a plurality of glass synthesizing burners for spraying soot particles toward said starting member;
a material supply device for supplying a glass material to each of said glass synthesizing burners;
a moving device for axially reciprocating said starting member relative to said glass synthesizing burners while axially rotating said starting member;
an input device for inputting a target outside diameter value d [mm] of the soot body to be formed or a characteristic value necessary for a calculation thereof; and
a control device for setting a marking point at a position separated from a junction between said core preform and each dummy rod by A × $d^2$ [mm] (where 0.0015 < A < 0.0030) toward the dummy rod based on the inputted target outside diameter value of the soot body or from the target outside diameter value of the soot body determined from the inputted characteristic value, controlling said moving device so as to reverse the direction of a relative movement of said moving device and effect said axial reciprocating at each time when all of said glass synthesizing burners reach said marking point or beyond toward an end of said starting member, and controlling said material supply device so as to supply the glass material to each of said glass synthesizing burners only when said glass synthesizing burners are located between the marking points.

*Fig.1*

EXHAUST

**Fig.2**

## Fig.3

## Fig.4

**Fig.5**

**Fig.6**

*Fig.7*

EXHAUST

*Fig.8*

## *Fig.9*

Y-axis: DISTANCE BETWEEN MARKING POINTS AND BOTH ENDS OF CONSTANT OUTSIDE DIAMETER PORTION (mm)

X-axis: OUTSIDE DIAMETER OF SOOT(mm)

## INTERNATIONAL SEARCH REPORT

| International application No. |
|---|
| PCT/JP98/05180 |

**A. CLASSIFICATION OF SUBJECT MATTER**
Int.Cl⁶ C03B37/018

According to International Patent Classification (IPC) or to both national classification and IPC

**B. FIELDS SEARCHED**

Minimum documentation searched (classification system followed by classification symbols)
Int.Cl⁶ C03B37/018

Documentation searched other than minimum documentation to the extent that such documents are included in the fields searched
| Jitsuyo Shinan Koho | 1926-1996 | Toroku Jitsuyo Shinan Koho | 1994-1998 |
| Kokai Jitsuyo Shinan Koho | 1971-1998 | Jitsuyo Shinan Toroku Koho | 1996-1998 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, 06-135733, A (The Furukawa Electric Co., Ltd.), 17 May, 1994 (17. 05. 94), Claims (Family: none) | 1-5 |
| A | JP, 05-221679, A (The Furukawa Electric Co., Ltd.), 31 August, 1993 (31. 08. 93), Claims (Family: none) | 1-5 |
| A | JP, 06-239640, A (Fujikura Ltd.), 30 August, 1994 (30. 08. 94), Claims (Family: none) | 3 |
| A | JP, 09-132423, A (The Furukawa Electric Co., Ltd.), 20 May, 1997 (20. 05. 97), Claims (Family: none) | 4 |

☐ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| 4 February, 1999 (04. 02. 99) | 16 February, 1999 (16. 02. 99) |

| Name and mailing address of the ISA/ | Authorized officer |
|---|---|
| Japanese Patent Office | |
| Facsimile No. | Telephone No. |

Form PCT/ISA/210 (second sheet) (July 1992)